# FASCICULE DE BREVET EUROPEEN

(11) **EP 4 175 878 B1**
(45) Date de publication et mention de la délivrance du brevet: **02.04.2025**
(21) Numéro de dépôt: 20804323.2
(22) Date de dépôt: 08.10.2020
(51) Int. Cl.: B63C 11/16, A41D 13/11, A61M 16/10, A62B 7/10, A62B 18/02, A62B 23/00, B01D 46/00

(54) **ADAPTATEUR PORTE FILTRES A USAGE RESPIRATOIRE**
FILTERHALTERADAPTER FÜR ATEMWEGSVERWENDUNG
FILTER-HOLDER ADAPTER FOR RESPIRATORY USE

(30) Priorité: 08.05.2020 FR 2004585
(43) Date de publication de la demande: 10.05.2023
(73) Titulaire: VEZINET, Denis, 30014 Nimes Cedex 1 (FR)
(72) Inventeur: VEZINET, Denis, 30014 Nimes Cedex 1 (FR)
(86) Numéro de dépôt international: PCT/FR2020/000250
(87) Numéro de publication internationale: WO 2021/224554

(56) Documents cités:
- WO-A1-2008/063126
- WO-A1-2019/008161
- WO-A2-2012/044113
- US-A- 5 267 557

## Description

La présente invention concerne un adaptateur porte filtres à usage respiratoire pour la transformation d'un masque facial intégral aquatique en masque respiratoire de protection des personnes.

### Domaine technique de l'invention

Dans un contexte de pandémie mondiale actuelle, la protection des personnels de santé est mise en péril face à la pénurie de masques de protections respiratoires de toutes sortes, la prise de risque est maximale, notamment lors de la prise en charge de malades extrêmement contagieux, de plus on sait que lors d'un éternuement, prés de deux millions de gouttelettes peuvent être éjectées à une vitesse de cent mètres seconde, (deux milles à l'heure), comparativement à moins de cent milles gouttelettes quand il s'agit d'une quinte de toux, (Yassi et Bryce, 2004), on sait également que les bioaérosols d'origine virale ont des dimensions de l'ordre de 0,02 à 0,25 micromètre, donnée émanent de la, (Américan Industrie Hygiène Association, 2000) et de (Goyer et al, 2001) spécialisé dans la construction de l'identité professionnelle, on comprend mieux avec ces données l'importance d'une protection totale du visage en période d'épidémie contagieuse.

Le document US5267557A divulgue un appareil respiratoire tel qu'un adaptateur porte filtre respiratoire.

Les documents WO2012044113A2, WO2019008161A1 et WO2008063126 divulguent aussi des appareils respiratoires de l'art antérieur.

### Présentation de l'invention

Un premier objet de l'invention est donc de suggérer un adaptateur porte filtre, connectable à divers masques facials intégrals aquatiques capable d'éliminer le danger liée à une exposition aux bioaérosols infectieux, aux polluants particulaires ou aérosols contenu dans l'air, un autre objet important de l'invention réside en un adaptateur porte filtres à usage respiratoire utilisant des matières filtrantes faciles à se procurer utilisées dans l'industrie, l'automobile, dans les appareils et dispositifs ménagers.

### Résumé de l'invention

A cet effet selon l'invention, ledit adaptateur est remarquable car celui-ci comporte :

Un tube longitudinal, ayant une première extrémité inférieure et qui est accessible de l'extérieur ; et
qui, d'autre part, est susceptible de s'emmancher sur le logement du moyen de couplage du masque facial intégral aquatique devant être adapté, précision faite ici en ce que ledit logement, est habituellement utilisé pour l'emmanchement d'un accessoire de type tuba ; et
qui de plus dispose d'au moins d'un système de blocage externe pour immobiliser ledit adaptateur sur le masque facial intégral aquatique ; et
qui par ailleurs comprend au moins un moyen d'étanchéité agencé dans la partie interne de la zone d'emmanchement ;
au moins un moyen de couplage qui est agencé au niveau d'une seconde extrémité extérieure ou dans le prolongement dudit tube longitudinal selon le mode de réalisation et qui est accessible de l'extérieur ; et
qui, d'autre part, est susceptible de permettre le raccordement de matériels de filtrations respiratoires, (tuyaux d'éléments filtrants portatif...), ledit moyen de couplage comportant au moins un système de fixation normalisé ou un tube cylindrique (raccord) selon le mode de réalisation, et débouchant à l'extérieur de ladite seconde extrémité ;
au moins un moyen de stockage qui est agencé au niveau d'une seconde extrémité supérieur ou dans le prolongement dudit tube longitudinal et qui est accessible de l'extérieur ; et
qui, d'autre part, est susceptible de stocker des matières filtrantes respiratoires,
caractérisé en ce que ledit moyen de stockage comportent au moins un ensemble, comprenant :
   un compartiment qui comporte un évidement longitudinal, et ayant une zone perforée situé dans son embase, ladite zone perforée communiquant avec la chambre intérieure de communication dudit du tube longitudinal, ladite chambre intérieure, permettant la circulation de l'air filtré devant être inspiré vers le canal d'admission d'air situé à l'extrémité inférieure du tube longitudinal dudit l'adaptateur ; et
   des taraudages usinés aux extrémités de l'évidement longitudinal pour le vissage des moyens de fixations du couvercle de fermeture décrit ci-dessous ; et
   un couvercle amovible et réversible permet la fermeture dudit compartiment retenant les matières filtrantes respiratoires devant être contenues à l'intérieur de celui-ci,
   ledit couvercle comportant également une zone perforée, délimitée à l'intérieur de la bordure dudit couvercle, ladite zone perforée assurant l'admission de l'air extérieur vers l'intérieur du compartiment,
   de plus ledit couvercle comportant également un joint amovible, positionnable sur les deux faces dudit couvercle et assurant l'étanchéité de l'ensemble évitant ainsi les aspirations d'air sur le pourtour supérieur dudit compartiment notamment, lors de l'utilisation de filtres respiratoires étanches, des vis de fixations, permettant le serrage du couvercle, sur le compartiment, lesdites vis de fixations étant agencées dans des emplacements prévus à cet effet,
   par ailleurs, pour assurer le maintien en place desdites vis de fixations sur le couvercle, lors de l'ouverture de celui-ci, lesdites vis de fixations sont retenues par un moyen de maintien composé par exemple de rondelles caoutchoutées de sections inférieures aux dites vis et qui sont insérées dans la partie filetée de celle-ci, de plus on peut prévoir une pluralité de systèmes de fixations, par exemple des charnières, pour assurer une ouverture rapide dudit capot de fermeture.

Bien entendu, il est également possible dans le cadre de la présente invention et pour des raisons de sécurité, de prévoir :
au moins un moyen de luminescence ;
qui, d'autre part, permet de rendre visible l'adaptateur dans l'obscurité lors de déplacement nocturne, par un procédé de fluorescence ou phosphorescence, ou tout simplement avec un matériau réfléchissant ou retro-réfléchissant ; et
au moins un moyen de communication ;
qui, d'autre part, permet de rendre audible la voix du porteur du masque,
en équipant l'adaptateur d'un système d'amplification du son alimenté par accus, utilisant une transmission sans fils ou filaire, reliant le système amplifier de l'adaptateur au micro situer dans le casque.

Ainsi, grâce à l'invention, on transforme un masque aquatique facial intégral, en masque respiratoire, pouvant intégrer les normes EN 149 2001, selon la directive Européenne en vigueur, relative aux équipements de protection Individuelle et pouvant également obtenir un niveau de protection proche de 99 % ainsi qu'une étanchéité totale pouvant être vérifiée par des tests appelés, (Fit-Test et Fit-Check), l'étanchéité variant selon la morphologie ou la pilosité du porteur du masque.

De ce fait :
On diminue sensiblement l'utilisation de masques respiratoires jetables.

On dispose d'un masque respiratoire lavable et réutilisable

Sécurité accrue pour la protection des personnes.

Transformation d'un masque largement diffusé en masque de sécurité de première. urgence contre le risque (épidémique, pollution atmosphérique,...).

Système de filtration remplaçable ou lavable, dans le cas de bandes filtrantes.

Système utilisant des matières filtrantes faciles à se procurer, utilisé dans l'industrie, l'automobiles, dans les appareils et dispositifs ménagers,...).

Une protection des individus, abordable, (matériels ou bandes filtrantes peu onéreuses), (Masques facials intégral aquatiques coutant une dizaine euros selon les marques).

Selon l'invention, pour augmenter les solutions de filtrations pouvant être connecté à l'adaptateur, on peut prévoir une pluralité de connections : norme EN 148/1, de type Baïonnettes, et de diverses formes de connexions pour le raccordement d'éléments filtrant portatifs par exemple.

On peut également prévoir divers systèmes de blocage, par crochetage, par clipsage, par vissage ou par colliers de serrages, fixes ou amovibles pour immobiliser ledit adaptateur sur masques facials intégral aquatiques

Par ailleurs, on notera que ladite invention peut bien entendu être adaptée à tous types de masques facials intégral aquatiques quelles qu'en soient leurs formes ou types de matériaux utilisés dans leurs fabrications et également adaptable à tous type de masques facials intégrals aquatiques utilisant des tubas, détachables, escamotables, ou amovibles.

De plus, ladite invention peut être réalisée avec de multiples procédés de fabrication à savoir :
(l'injection, l'impression 3 D, mécano-soudage...), en diverses matières,( Métal, PVC, ABS, matériaux composites, matières plastiques, matériaux recyclés ...),et peut avoir une forme tubulaire, (ovale, carré, rectangulaire, ...), (allongé, en col de cygne, bec de canard, ...),et utilisée diverses dimensions et sections, en fonction des divers équipements et systèmes filtrant devant être connectés à ladite invention ou de la forme du logement de couplage ou d'emmanchage dudit masque facials intégral aquatiques devant recevoir ledit l'adaptateur.

D'autre part l'invention est susceptible d'être un élément filtrant jetable, la partie du compartiment filtrant est alors intégré à l'adaptateur, et réalisée selon le procédé le mieux adapté pour sa réalisation, (mécano- soudage, moulage, injection ...).

Description des modes de réalisation,
selon un premier mode de réalisation préféré, ledit adaptateur comporte au moins un ensemble comprenant :
un tube longitudinal qui comporte à la base de sa première extrémité, un système de blocage par collier de serrage radial, agencé sur sa paroi externe en direction axiale, ledit tube longitudinal comporte également une fente de serrage qui prend naissance à sa base et s'étendant en direction axiale sous le collier de serrage, la longueur de ladite fente de serrage est légèrement supérieure à l'épaisseur du collier de serrage.

Ainsi ladite fente de serrage permet la réduction de la section dudit tube longitudinal à la base de son extrémité inférieure, sous l'action de serrage dudit du collier de serrage.

Par ailleurs ledit tube longitudinal comporte également un moyen d'étanchéité situé dans sa paroi interne en direction axiale et agencé légèrement en amont de la zone de serrage dudit collier de serrage, ledit moyen d'étanchéité comprenant une gorge circulaire et un joint de type torique logé dans la dite gorge,

à cet effet, l'agencement en retrait du moyen d'étanchéité vis-à-vis de la zone de serrage dudit collier de serrage, permet de ne pas écrasé ledit joint torique lors de l'action de serrage dudit collier de serrage, tout en conservant une avancée suffisante du logement du moyen de couplage du masque facial intégral aquatique sur la zone d'étanchéité du joint torique ;
le tube longitudinal comporte également un compartiment de stockage agencé au niveau de sa partie centrale supérieure, et
ledit compartiment de stockage comportant un ensemble, comprenant un évidement longitudinal ayant une zone perforée traversante située dans son embase, ladite zone perforée traversante communique avec une chambre intérieure de communication située dans la partie centrale inférieure dudit tube longitudinal, ladite chambre intérieure de communication, permet la circulation de l'air filtré devant être inspiré, vers le canal d'admission d'air situé à la première extrémité du tube longitudinal dudit adaptateur.

Des taraudages sont usinés dans des trous borgnes préalablement percés, dans des emplacements, centrés latéralement et longitudinalement aux deux extrémités extérieures dudit évidement longitudinal, de plus lesdits taraudages sont usinés aux pas et sections identique aux moyens de fixation du couvercle énoncé ci-après.

Le compartiment comporte un couvercle amovible et réversible qui permet la fermeture dudit compartiment. Ledit couvercle comporte des perforations traversante sur une partie de son aire et délimitées à l'intérieur de la bordure dudit couvercle, lesdites perforations traversantes assurent l'admission de l'air extérieur vers l'intérieur du compartiment, ledit couvercle comporte également un joint amovible, positionnable sur les deux faces dudit couvercle et qui assure l'étanchéité entre ledit couvercle et ledit compartiment, évitant ainsi les aspirations d'air sur le pourtour supérieur dudit compartiment, notamment, lors de l'utilisation de filtres respiratoires étanches.

Des trous traversants sont ménagés dans des emplacements centrés latéralement et longitudinalement aux deux extrémités dudit couvercle et qui permettent d'introduire des moyens de serrage par exemple de vis de fixations par exemple des vis à têtes plates filetées qui permettent le serrage dudit couvercle sur ledit compartiment, les emplacements desdits trous traversants correspondent également aux emplacements desdits taraudages dudit évidement longitudinal.

De plus pour assurer le maintien en place desdites vis de fixations sur ledit couvercle, lors l'ouverture de celui-ci, lesdites vis de fixations sont retenues par un moyen de maintien, composé par exemple de rondelles élastiques de sections inférieures audites vis de fixations. Une fois celle-ci insère dans les trous traversant du couvercle, lesdites rondelles élastiques sont emmanchées dans le sens axial dans la partie des vis débouchant sous le couvercle et positionnées à la hauteur du plan inférieur dudit couvercle, par ailleurs, la deuxième extrémité dudit tube longitudinal non utilisé dans cette réalisation, comporte un moyen de fermeture étanche agencé à la base de ladite seconde extrémité.

De ce fait l'ensemble décrit ci-dessus a pour fonction d'emmancher et d'immobiliser ledit l'adaptateur sur le logement du moyen de couplage du masque facial intégral aquatique à adapter et de rendre la zone d'accouplement étanche entre les deux parties.

Le compartiment fermé par le couvercle à quant à lui la fonction de filtrer l'air extérieur aux moyens de diverses matières filtrantes, (tissées ou non tissées), insérées préalablement dans l'évidement longitudinal, permettant au porteur du masque facial intégral aquatique équipé de l'adaptateur, de respirer un air sain.

Ce mode de réalisation est à la fois simple, efficace, l'adaptateur pouvant être réalisé avec des procédés de fabrications tels que l'impression 3D, utilisant peu de matières premières, et pouvant déboucher sur une production industrielle en nombres

De plus l'adaptateur peut utiliser des matériaux filtrants, de diverses marques issus de diverses industries, largement diffusés et accessible aux grands publics quelles que soient les régions du monde, il pourra également être équipé de matières filtrantes de classes supérieures de type EPA, HEPA, HLPA, THE, de type F et H, ou de composés bioactifs

Selon un mode d'assemblage préférentiel, ledit adaptateur est constitué d'au moins trois pièces constituant un ensemble comprenant :
une pièce principale composée d'un tube longitudinal qui comporte à la base de sa première extrémité, un système de blocage par collier de serrage radial, agencé sur sa paroi externe en direction axiale, ledit tube longitudinal comporte également une fente de serrage qui prend naissance à sa base et s'étendant en direction axiale sous le collier de serrage, la longueur de ladite fente de serrage est légèrement supérieure à l'épaisseur du collier de serrage. Ainsi ladite fente de serrage permet la réduction de la section dudit tube longitudinal à la base de son extrémité inférieure, sous l'action de serrage dudit du collier de serrage. Par ailleurs ledit tube longitudinal comporte également un moyen d'étanchéité situé dans sa paroi interne en direction axiale et agencé légèrement en amont de la zone de serrage dudit collier de serrage, ledit moyen d'étanchéité étant composé d'une gorge circulaire et d'un joint de type torique logé dans la dite gorge. A cet effet, l'agencement en retrait du moyen d'étanchéité vis-à-vis de la zone de serrage dudit collier de serrage, permet de ne pas écraser ledit joint torique lors de l'action de serrage dudit collier de serrage, tout en conservent une avancé suffisante du logement du moyen de couplage du masque facial intégral aquatique sur la zone d'étanchéité du joint torique et une seconde extrémité dudit tube longitudinal qui comporte à sa base un moyen de couplage en direction axiale composé d'un tube cylindrique (raccord) agencé en saillie ; et une pièce secondaire représentant un élément de filtration portatif, comportant un tube longitudinal qui comporte à la base de sa première extrémité, un moyen de couplage en direction axiale composé d'un tube cylindrique (raccord) agencé en saillie, permettant le raccordement d'un tuyau, ledit tube longitudinal comporte également un moyen de stockage agencé au niveau de sa partie centrale supérieure, ledit moyen de stockage représente un compartiment de stockage comportant un ensemble, comprenant un évidement longitudinal ayant une zone perforée situer à son embase, ladite zone perforée communique avec une chambre intérieure de communication situer dans la partie centrale inférieure dudit tube longitudinal, ladite chambre intérieure de communication, permet la circulation de l'air filtré devant être inspiré, vers le canal d'admission d'air situé à l'extrémité du tube longitudinal dudit élément de filtration portatif . Des taraudages sont usinés dans des trous borgnes préalablement percés, dans des emplacements, centrés latéralement et longitudinalement aux deux extrémités extérieures dudit évidement longitudinal, de plus lesdits taraudages sont usinés aux pas et sections identique aux moyens de fixation du couvercle énoncé ci-après, le compartiment comporte un couvercle amovible et réversible qui permet la fermeture dudit compartiment. Ledit couvercle comporte des perforations traversantes, sur une partie de son aire et délimitées à l'intérieur de la bordure dudit couvercle, les perforations traversantes assurent l'admission de l'air extérieur vers l'intérieur du compartiment, ledit couvercle comporte également un joint amovible, positionnable sur les deux faces dudit couvercle et qui assure l'étanchéité entre ledit couvercle et ledit compartiment, évitant ainsi les aspirations d'air sur le pourtour supérieur dudit compartiment, notamment, lors de l'utilisation de filtres respiratoires étanches. Des trous traversants sont ménagés dans des emplacements centrés latéralement et longitudinalement aux deux extrémités dudit couvercle qui permettent d'introduire des moyens de serrage par exemple des vis à têtes plates filetés qui permettent le serrage dudit couvercle sur ledit compartiment. les emplacements desdits trous traversants correspondent également aux emplacements desdits taraudages dudit évidement longitudinal. De plus pour assurer le maintien en place desdites vis de fixations sur ledit couvercle lors l'ouverture de celui-ci, lesdites vis de fixations sont retenues par un moyen de maintien par exemple des rondelles élastiques de sections inférieures aux dites vis de fixations, une fois celles-ci insérées dans les trous traversant du couvercle, lesdites rondelles élastiques sont emmanchées dans le sens axial dans la partie des vis débouchant sous le couvercle et positionnées à la hauteur du plan inférieur dudit couvercle. ; et
par ailleurs, la seconde extrémité dudit tube longitudinal non utilisé dans cette réalisation comporte un moyen de fermeture de type connus par exemple un bouchon, rendent étanche ladite seconde extrémité du tube longitudinal. De plus l'élément de filtration portatif, est équipé d'un moyen de fixation, par clips attache tube par exemple en inox, ce systéme d'attache est particulièrement remarquable, car il permet d'introduire une ceinture usuelle a la base intérieure dudit clips attache tube et de clipsé l'élément de filtration portatif sur ces extrémités, ainsi l'élément de filtration portatif est rapidement agencé a la taille d'une personne, tout en disposant d'un système de fixation détachable
une troisième pièces composée d'un moyen de raccordement représentant un élément de section circulaire souple de type tuyau souple raccordant la pièce principale à la pièce secondaire, ledit tuyau souple ayant un diamètre identique à ses deux extrémités et correspondant aux moyens de couplages de la pièce principale et à celle de la pièce secondaire, de plus la longueur dudit tuyau est adapté en fonction de la distance reliant la pièce principale à la pièce secondaire.

De ce fait l'ensemble décrit ci-dessus a pour fonction d'emmmancher une première partie sur le masque facial intégral aquatique à adapter, la deuxième partie constituent l'élément de filtration, le tube souple quant à lui assurant la liaison entre les deux parties.

Ce mode de réalisation permet de réduire le poids de l'adaptateur et permet à l'utilisateur de vaquer à ses occupations avec un maximum de confort en ayant le compartiment de l'élément de filtration portatif fixé à la taille, maintenue par une ceinture ou une sangle.

Mais un autre avantage de l'invention non négligeable est de supprimer également une problématique rencontrée par le personnel de santé, notamment en fin de service, au moment ou ils doivent se désinfecté avant leurs retour à leurs domiciles.

Le porteur du dispositif au moment de la douche pourra conserver le masque facial intégral aquatique sur lui et pourra détacher le compartiment filtrant pour par exemple, le suspendre et se doucher et cela sans risque de contamination, le masque facial intégral aquatique étant étanche à l'eau de part ces qualité première.

### Brève description des dessins

Les figures des dessins annexés, feront bien comprendre comment l'invention peu être réaliser.

Sur ces figures, des références identiques désignent des éléments semblables.

L'invention sera mieux comprise à la lecture de la description qui suit d'un mode de réalisation de l'invention donné à titre d'exemple non limitatif, en référence aux dessins annexés, sur lesquels :
La figures 1 est une vue de détail d'un premier mode de réalisation de l'adaptateur avec son couvercle conformément à l'invention
La figure 2 est une vue de dessus de l'adaptateur et son couvercle conforme à un premier mode de réalisation de l'invention
La figure 3 est une vue de détail du moyen de blocage avec de l'action de serrage conforme à un premier mode de réalisation de l'invention
La figure 4 est une vue éclatée de l'adaptateur conforme à un premier mode de réalisation de l'invention

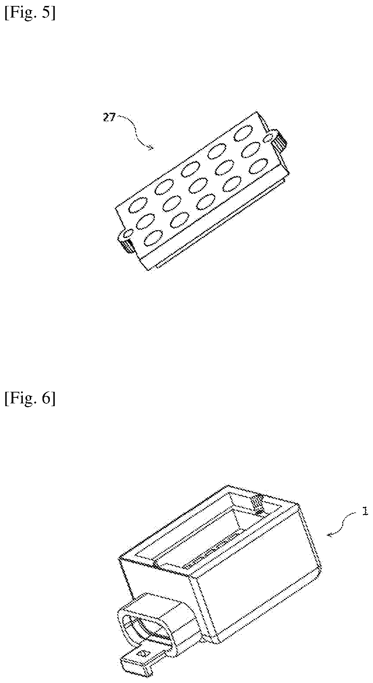

La figure 5 est une vue en perspective du couvercle de l'adaptateur
La figure 6 est une vue en perspective de l'adaptateur avec une variante de fixation conforme à un autre mode de réalisation de l'invention

### Description détaillée de l'invention,

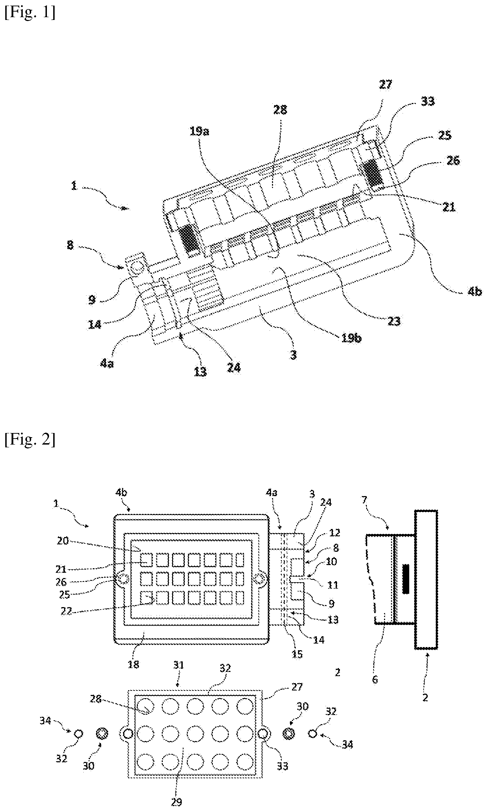

La figure 2 représente un exemple de réalisation d'un adaptateur porte filtre 1 à usage respiratoire conforme à la présente invention,
à cet effet selon l'invention :
L'adaptateur 1 qui est par exemple réalisé en ABS, comporte un tube longitudinal 3 ayant une première extrémité 4a et une seconde extrémité 4b ainsi qu'une partie centrale supérieur 19a et inferieure 19b.

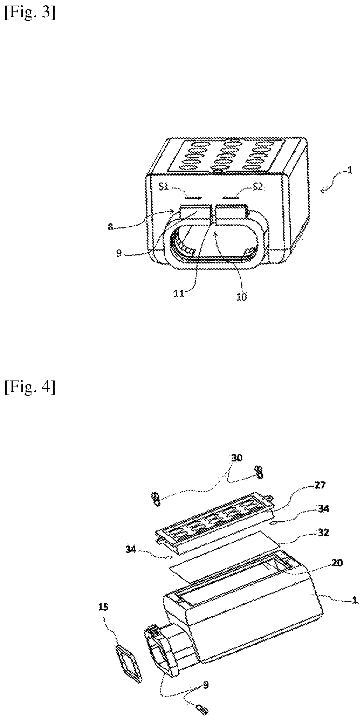

Dans cet exemple ledit tube longitudinal 3 comporte une première extrémité 4a qui comporte à sa base un moyen de blocage radial 8 comportant un système de serrage radial 9 fixe agencé en direction axiale sur sa paroi externe ;
le tube longitudinal 3 comporte également un moyen de réduction 10 comportant une fente de serrage 11 qui prend naissance à la base de sa première extrémité 4a et qui s'étend en direction axiale sous le système de serrage radial 9, la longueur de ladite fente de serrage 11 est légèrement supérieure à la zone de serrage radiale 12 dudit système de serrage radial 9. Ainsi ladite fente de serrage 11 permet la réduction de la section dudit tube longitudinal 3, sous l'action de serrage S1, S2 dudit système de serrage radial 9 permettant ainsi le blocage du tube longitudinal 3 sur le logement 6 du moyen de couplage 7, du masque 2 facial intégral aquatique à adapter. Sur la figure 3 les flèches S1 et S2 symbolisent l'action de serrage ;
par ailleurs ledit tube longitudinal 3 comporte également un moyen d'étanchéité radial 13 situé dans sa paroi interne en direction axiale et agencé légèrement en amont de la zone de serrage radiale 12 dudit d'un système de serrage radial 9, ledit moyen d'étanchéité radial 13 comprend une gorge circulaire radiale 14 et comporte un joint circulaire radial 15 de type torique agencé dans la dite gorge circulaire radiale 14 ;
à cet effet, l'agencement en retrait du moyen d'étanchéité radial 13 vis-à-vis de la zone de serrage radiale 12 dudit système de serrage radial 9 à pour but d'évite l'écrasement dudit joint circulaire radial 15 lors de l'action de serrage S1,S2 dudit système de serrage radial 9, tout en conservant une avancée suffisante du logement 6 du moyen de couplage 7 du masque 2 facial intégral aquatique sur la zone d'étanchéité du joint circulaire radial 15 et rendent étanche la zone d'accouplement dudit tube longitudinal 3 avec le logement 6 du moyen de couplage 7 du masque 2 facial intégral aquatique.
le tube longitudinal 3 comporte également un compartiment de stockage 18 accessible de l'extérieur, qui est agencé au moins au niveau de la partie centrale supérieure 19a illustrée en figure 1 ; et
qui, d'autre part, est susceptible de stocker des matières filtrantes respiratoires, caractérisé en ce que ledit compartiment de stockage 18 présente un évidement longitudinal 20, qui comprend :
   une zone de perforation traversante 21 située dans l'embase 22 dudit évidemment longitudinal 20, ladite zone perforation traversante 21 communiquant avec la chambre intérieure de communication 23 situer niveau de la partie centrale inférieure 19b illustrée en figure 1, ladite chambre intérieure communication 23, permettant la circulation de l'air filtré vers le canal d'admission d'air inspiré 24 située dans la première extrémité 4a du tube longitudinal 3 dudit l'adaptateur 1. De plus des taraudages 25 sont usinés dans des trous borgnes 26 préalablement percés verticalement dans des emplacements centrés latéralement et longitudinalement aux deux extrémités extérieure dudit évident longitudinal 20 ; et
   un couvercle 27 amovible et réversible qui permet la fermeture dudit compartiment de stockage 18, en retenant les matières filtrantes respiratoires stockées à l'intérieur de celui-ci, ledit couvercle 27 comportant également des perforations traversantes 28 agencées sur une partie de son aire 29 et délimitées à l'intérieur de la bordure dudit couvercle 27. Ladite zone perforée traversante 28 assurant l'admission de l'air extérieur vers l'intérieur du compartiment de stockage 18, le couvercle 27 comportant également au moins un moyen d'étanchéité 31 comprenant un joint plat amovible 32 positionnable sur les deux faces dudit couvercle 27 et assurant l'étanchéité entre ledit couvercle 27 et ledit compartiment de stockage 18, évitant ainsi les aspirations d'air sur le pourtour supérieur dudit compartiment de stockage 18.notamment, lors de l'utilisation de filtres respiratoires étanches. De plus des trous traversants 33 sont ménagés dans des emplacements centrés latéralement et longitudinalement aux deux extrémités dudit couvercle 27 et correspondant aux emplacements des taraudages 25 dudit évident longitudinal 20 lesdits trous traversant 33 permettent d'introduire des moyens de fixations 30 de type vis filetés à tête plate permettant le serrage dudit couvercle 27 sur ledit compartiment de stockage 18. Par ailleurs pour assurer le maintien en place desdits moyens de fixations 30 sur ledit couvercle 27, lors de l'ouverture de celui-ci, lesdits moyens de fixations 30 sont retenus par au moins des moyens de maintien 34, une fois les moyens de fixation 30 insérés dans lesdits trous traversants 33, les moyens de maintien 34 sont emmanchés dans desdits moyens de fixations 30 dans le sens axial et dans la partie débouchant sous ledit couvercle 27 et positionnés à la hauteur du plan inferieur dudit couvercle 27.

On constate par ailleurs dans cet exemple que la seconde l'extrémité 4b du tube longitudinal, est fermée.

## Revendications

1. Adaptateur porte filtre respiratoire (1) pour masque facial intégral aquatique (2) comportant au moins un tube longitudinal (3) qui comprend :
au moins une première extrémité (4a) susceptible de s'emmancher sur au moins un logement (6), du moyen de couplage (7), du masque (2) facial intégral aquatique ; et
au moins un moyen de blocage radial (8) comportant au moins un système de serrage radial (9) agencé à la base de la première extrémité (4A) en direction axiale sur la paroi externe dudit tube longitudinal (3) ;et
au moins un moyen de réduction (10) comportant au moins une fente de serrage (11) qui prend naissance à la base de la première extrémité (4a) du tube longitudinal (3) et qui s'étend en direction axiale sous le système de serrage radial (9), la longueur de ladite fente de serrage (11) est légèrement supérieure à la zone de serrage radiale (12) dudit système de serrage radial (9), ainsi ladite fente de serrage (11) permet la réduction de la section dudit tube longitudinal (3), sous l'action de serrage (S1, S2) dudit système de serrage radial (9) permettant ainsi le blocage du tube longitudinal (3) sur le logement (6) du moyen de couplage (7), du masque (2) facial intégral aquatique à adapter ;et
au moins un moyen d'étanchéité radial (13) situé au niveau de la première extrémité (4a) dans la paroi interne en direction axiale du tube longitudinal(3) et agencé légèrement en amont de la zone de serrage radiale (12) dudit système de serrage radial (9), ledit moyen d'étanchéité radial (13) comportant au moins une gorge circulaire radiale (14) et au moins un joint circulaire radial (15) logé dans la dite gorge circulaire radiale (14) ; et
au moins une seconde extrémité (4b) comportant au moins des moyens des raccordements (16) qui sont accessibles de l'extérieur et qui d'autre part, sont susceptibles de permettre la connexion d'une pluralité d'accessoires ; et
au moins un compartiment de stockage (18) susceptible de stocker des matières filtrantes respiratoires et agencé au moins au niveau de la partie centrale supérieur (19a) du tube longitudinal (3) et qui est accessible de l'extérieur, et
le tube longitudinal (3), comporte un évidement longitudinal (20), qui comprend une zone de perforations traversante (21) située dans l'embase (22) dudit évidement longitudinal (20), ladite zone de perforations traversantes (21) communiquant avec la chambre intérieure de communication (23) situé niveau de la partie centrale inférieure (19b) dudit du tube longitudinal (3), ladite chambre intérieure communication (23), permettant la circulation de l'air filtré vers le canal d'admission d'air inspiré (24) situé dans la première extrémité (4a) dudit tube longitudinal (3) dudit l'adaptateur (1), des taraudages (25) sont usinés dans des trous borgnes (26) préalablement percés verticalement dans des emplacements centré latéralement et longitudinalement aux deux extrémités extérieure dudit évident longitudinal (20) de plus ledit compartiment de stockage (18) comporte de plus au moins un couvercle (27) amovible et réversible, qui permet la fermeture dudit compartiment de stockage (18), ledit couvercle (27) comporte des perforations traversantes (28) sur une partie de son aire (29) ainsi qu'une pluralité de au moins de moyens de fixations (30) et de au moins de moyens d'étanchéités (31).

2. Adaptateur porte filtre respiratoire, selon la revendication 1, **caractérisé en ce que** ledit couvercle (27) amovible et réversible permet la fermeture dudit compartiment de stockage (18), tout en retenant les matières filtrantes respiratoires stockées à l'intérieur de celui-ci, ledit couvercle (27) comportant également des perforations traversantes (28), agencées sur une partie de son aire (29) et délimitées à l'intérieur de la bordure dudit couvercle (27), lesdites perforations traversantes (28) assurant l'admission de l'air extérieur vers l'intérieur du compartiment de stockage (18), de plus le couvercle (27) comporte au moins un moyen d'étanchéité (31) comprenant au moins un joint (32) plat amovible positionnable sur les deux faces dudit couvercle (27) et assure l'étanchéité entre ledit couvercle (27) et ledit compartiment de stockage (18), évitant ainsi les aspirations d'air sur le pourtour supérieur dudit compartiment de stockage (18).notamment, lors de l'utilisation de filtres respiratoires étanches, ledit couvercle (27) comporte également des trous traversants (33) qui sont ménagés dans des emplacements, centré latéralement et longitudinalement a ses extrémités et qui permettent d'introduire des moyens de fixation (30) de type vis filetés à tête plate qui permettent le serrage dudit couvercle (27) sur ledit compartiment de stockage (18), lesdits moyens de fixation (30) se vissant dans les taraudages (25) usinés dans l'évidement longitudinal (20), de plus les pas et sections des moyens de fixation (30).étant identiques aux taraudages (25) de l'évidement longitudinal (20), les emplacements des trous traversants (33), dudit couvercle (27) correspondant également aux emplacements dédits taraudages (25), et de plus pour assurer le maintien en place desdits moyens de fixation (30) sur ledit couvercle (27), lors de l'ouverture de celui-ci, lesdits moyens de fixation (30) sont retenues par au moins des moyens de maintien (34), une fois les moyens de fixation (30) insérés dans les trous traversants (33), les moyens de maintien (34) sont emmanchés dans desdits moyens de fixation (30) dans le sens axial et dans la partie débouchant sous ledit couvercle(27), lesdits moyens de maintien (34) étant positionnés à la hauteur du plan inferieur dudit couvercle (27).

3. Adaptateur porte filtre respiratoire selon la revendication 1 ou 2 **caractérisé en ce que** le tube longitudinal (3), comporte de plus au moins un moyens de blocage comprenant un dispositif de fixation par clipsage comprenant une languette percée d'un orifice agencé au niveau de la première l'extrémité (4a).

4. Adaptateur porte filtre respiratoire, selon l'une quelconque des revendications 1 à 3 **caractérisé en ce qu'**il comporte de plus au moins des moyens d'étanchéité, de préférence en caoutchouc agencés à la base intérieure dudit évidement longitudinal (20).

5. Adaptateur porte filtre respiratoire, selon l'une quelconque des revendications 1 à 4 **caractérisé en ce qu'**il comporte de plus au moins des moyens de fermeture étanche à la seconde l'extrémité (4b) dudit tube longitudinal

6. Adaptateur porte filtre respiratoire, selon l'une quelconque des revendications 1 à 5 **caractérisé en ce que** le compartiment de stockage (18) comporte au moins des moyens de pentures pour connecter de façon pivotante un des ses cotés supérieur longitudinaux ou transversaux avec un des cotés longitudinaux ou transversaux du couvercle (27) et comporte au moins des moyens de fermetures par clipsage pour immobiliser le couvercle (27) sur le compartiment de stockage(18).

7. Adaptateur porte filtre respiratoire selon l'une quelconque des revendications précédente **caractérisé en ce qu'**il comporte au moins un canal d'admission d'air inspiré, agencé dans le prolongement interne de la chambre intérieure de communication (23) et communiquant avec le compartiment de stockage (18) et la première extrémité (4a) et au moins un conduit d'échappement d'air expiré, agencé dans le prolongement interne de la chambre intérieure de communication (23) et communiquant avec la première extrémité (4a), par ailleurs l'air expiré est évacué par au moins une valve anti-retour logé dans un compartiment susceptible être en communication avec au moins un conduit d'échappement d'air expiré, le compartiment étant situé dans la chambre intérieure de communication (23), et au moins au niveau de la seconde extrémité (4b) dudit tube longitudinal (3).

8. Adaptateur porte filtre respiratoire, selon l'une quelconque des revendications précédentes, **caractérisé en ce qu'**il soit de type jetable, la partie filtration étant incorporer dans le corps de l'adaptateur(1) et susceptible d'être réaliser avec au moins des matières, métalliques, plastiques, composites ou biodégradables et avec au moins un procédé de fabrication par, mécano- soudage, moulage ou injection.

9. Adaptateur porte filtre respiratoire, selon l'une quelconque des revendications précédentes, **caractérisé en ce que** le tube longitudinal (3), comporte de plus au moins des moyens de blocages comportant une pluralité de systèmes de fixations agencées au niveau de la première l'extrémité (4a).

10. Adaptateur porte filtre respiratoire, selon l'une quelconque des revendications précédentes, **caractérisé en ce qu'**il comporte de plus, au moins des moyens d'emmanchements ou de couplages adaptables à tous type de connexions utilisé par les différentes marques de masques facials intégrals aquatiques pour l'accouplement de leurs tubas, et ce quel que soit le type de tuba,(détachables, escamotables, amovibles,...), utilisé par les marques

11. Adaptateur porte filtre respiratoire, selon l'une quelconque des revendications 1 à 7, **caractérisé en ce qu'**il comporte de plus au moins un moyen de connexion pour consommables filtrants à usages respiratoires agencé au moins au niveau de la seconde extrémité (4b), ou au moins au niveau de la partie centrale supérieure(19A) ou au niveau de la partie centrale inférieure (19b) dudit tube longitudinal (3).

12. Adaptateur porte filtre respiratoire, selon l'une quelconque des revendications précédentes, **caractérisé en ce qu'**il comporte de plus des moyens de luminescences permettant de le rendre visible dans l'obscurité par au moins un procédé de fluorescence ou phosphorescence, ou tout simplement par au moins un procédé de réfléchissement ou de retro-réfléchissement.

13. Adaptateur porte filtre respiratoire, selon l'une quelconque des revendications précédentes, **caractérisé en ce qu'**il comporte de plus au moins des moyens de communications, qui permettent de rendre audible la voix du porteur du masque (2), en équipant l'adaptateur (1) d'un système d'amplification du son alimenté par accus, utilisant une transmission sans fils ou filaire, reliant le système amplifié de l'adaptateur (1) au micro situé dans le masque (2).

14. Adaptateur porte filtre respiratoire, selon l'une quelconque des revendications précédentes, **caractérisé en ce qu'**il comporte de plus au moins une première partie principale comportant un tube longitudinal avec une première extrémité s'emmanchant sur un masque facials intégral aquatique à adapter et comportant à sa seconde extrémité en saillie au moins un moyen de raccordements, et comportant au moins une partie secondaire indépendante qui comporte un compartiment de stockage pour matières filtrantes respiratoire agencé au moins sur la partie centrale d'un tube longitudinal, et disposant d'au moins un moyen de raccordements en saillie à sa première l'extrémité et disposant également de moyens de fermeture étanche à sa seconde extrémité, et de plus au moins un élément de section circulaire souple comportant au moins des moyens de raccordements à ses extrémités permettant de relier la partie principale de l'adaptateur à la partie secondaire indépendante.

15. Adaptateur porte filtres respiratoires selon l'une quelconque des revendications précédentes **caractérisé en ce que** le tube longitudinal (3) comporte de plus au moins un compartiment de stockage (18) pour matières filtrantes respiratoires, accessible de l'extérieur, pouvant être au moins de forme cylindrique et être au moins agencé en direction axiale dans la partie interne dudit tube longitudinal (3), ledit compartiment de stockage (18) s'étendant de la base de la seconde extrémité (4b) jusqu'à la hauteur du canal d'admission d'air inspiré (24) situé au niveau de la première extrémité (4a) dudit tube longitudinal (3).

16. Adaptateur porte filtres respiratoires selon l'une quelconque des revendications précédentes **caractérisé en ce que** le couvercle (27) comporte également au moins des évidements cylindriques qui sont ménagés en direction axiale dans les emplacements des trous traversants (33) et qui permettent d'introduire au moins la tête cylindrique des moyens de fixations (30) qui peuvent être au moins de types Chc / Btr ou Czx / Torx.

## Patentansprüche

1. einen Atemfilterhalteradapter (1) für eine Wasservollgesichtsmaske (2) mit mindestens einem Längsrohr (3), das Folgendes umfasst:
mindestens ein erstes Ende (4a), das angepasst ist, um über mindestens eines zu passen Gehäuse (6), Kopplungsmittel (7), aquatische Vollgesichtsmaske (2) und die mindestens ein radiales Verriegelungsmittel (8) mit mindestens einem radialen Spannsystem (9), das an Basis des ersten Endes (4A) in axialer Richtung an der Aussenwand des Längsrohrs (3) und
mindestens ein Reduktionsmittel (10) mit mindestens einem Klemmschlitz (11), der am Boden des ersten Ende (4a) des Längsrohrs (3) und sich axial unter dem radialen Spannsystem (9) erstreckt, die Länge des Klemmschlitzes (11) geringfügig grösser ist als der radiale Klemmbereich (12) des radialen Spannsystems (9) der Klemmschlitz (11) ermöglicht somit die Reduzierung des Abschnitts des Längsrohrs (3), und unter der Klemmwirkung (s1, s2) des radialen Spannsystems (9), wodurch die Blockierung des Längsrohrs (3) ermöglicht wird on wobei das Gehäuse (6) des Kopplungsmittels (7), die aquatische Vollgesichtsmaske (2) angepasst werden soll
die mindestens ein Radialdichtungsmittel (13), das sich an dem ersten Ende (4a) befindet Innenwand in axialer Richtung des Längsrohrs (3) angeordnet und geringfügig stromaufwärts angeordnet ist radialer Klemmbereich (12) des Spannsystems und Radial (9), wobei die radialen Dichtungsmittel (13) mindestens eine radiale kreisförmige Nut (14) aufweisen und mindestens eine radiale kreisförmige Dichtung (15), die in der radialen kreisförmigen Nut (14) untergebracht ist
und mindestens ein zweites Ende (4b), das zumindest Mittel der Anschlüsse (16) aufweist, die von und die andererseits angepasst sind, um die Verbindung einer Vielzahl von Zubehörteilen zu ermöglichen
die mindestens ein Lagerfach (18), das in der Lage ist, Atemfiltermaterialien zu lagern und zumindest in der Höhe von-oberer Mittelteil (19a) des Längsrohrs (3), der von aussen zugänglich ist, Verfahren t das Längsrohr (3) eine Längsausnehmung (20) aufweist, die umfasst Zone von Durchgangsperforationen (21), die in der Basis (22) der Längsausnehmung (20) angeordnet sind, die wobei der Durchgangslochbereich (21) mit der inneren Kommunikationskammer (23) in Verbindung steht, die sich auf Höhe befindet einen unteren zentralen Abschnitt (19b) des Längsrohrs (3), wobei die innere Kommunikationskammer (23), in Zulassen, dass die gefilterte Luft zu dem eingespitzten Lufteinlasskanal (24) strömt das erste Ende (4a) des Längsrohrs (3) des Adapters (1), Abgriffe (25) werden in Sacklöcher (26) eingearbeitet, die zuvor vertikal an seitlich zentrierten Stellen gebohrt wurden, und in Längsrichtung an beiden äusseren Enden der genannten Längsseite (20) zusätzlich zu dieser Kammer ferner mindestens eine abnehmbare Abdeckung (27) umfasst, und reversibel, was das Schliessen des Staufachs (18) ermöglicht, der Deckel (27) Durchbrüche (28) an einem Bereich seines Bereichs (29) sowie eine Vielzahl von Durchbrüchen (28) aufweist mindestens eines Befestigungsmittels (30) und zumindest eines Dichtungsmittels (31).

2. der Atemfilterhalteradapter nach Anspruch 1, t dass der entfernbare und reversible Deckel (27) den Verschluss des Aufbewahrungsfachs (18) ermöglicht, unter Beibehaltung der darin gespeicherten Atemfiltermaterialien, wobei die Abdeckung (27) auch Durchgangsperforationen (28) aufweist, an einem Abschnitt seines Bereichs (29) angeordnet und innerhalb des Randes der Abdeckung (27) begrenzt ist wobei die Durchgangsperforationen (28) die Zufuhr der Aussenluft zur Innenseite des Staufachs (18) bereitstellen, on Ferner umfasst die Abdeckung (27) mindestens ein Dichtungsmittel (31), das mindestens eine entfernbare, entfernbare Flachdichtung (32) umfasst beide Flächen des Deckels (27) und eine Abdichtung zwischen dem Deckel (27) und dem Fach von Speichern (18), wodurch eine Luftabsaugung am oberen Umfang des Aufbewahrungsfachs (18) vermieden wird insbesondere bei Verwendung von versiegelten Atemfiltern, die Abdeckung (27) auch Durchgangslöcher (33) aufweist, die an Stellen vorgesehen sind, die seitlich zentriert sind, und in Längsrichtung an ihren Enden, die die Einführung von Gewindeschrauben-ähnlichen Befestigungsmitteln (30) ermöglichen Flachkopf, mit dem der Deckel (27) auf das Ablagefach (18) festgezogen werden kann wobei die Befestigungsmittel (30) in die in der Längsausnehmung (20) bearbeiteten Gewinde (25) einschraubbar sind, zusätzlich zu den Steigungen und Abschnitten des Fixiermittels (30) identisch mit den Abgriffen (25) der Längsausnehmung (20), den Stellen der Durchgangslöcher (33), des Deckels (27) ebenfalls den sogenannten Abstichstellen (25) entspricht, und ferner zur Sicherstellung der Halten des Befestigungsmittels (30) an dem Deckel (27) beim Öffnen desselben, die Befestigungsmittel (30) durch mindestens Haltemittel (34) gehalten werden nachdem das Befestigungsmittel (30) in die Durchgangslöcher (33) eingesetzt ist, in Das Haltemittel (34) ist in das Befestigungsmittel (30) gestülpt die axiale Richtung und in dem Öffnungsabschnitt unter dem Deckel (27), wobei die Haltemittel (34) in der Höhe der unteren Ebene des Deckels (27) positioniert sind.

3. Atemfilterhalteradapter nach Anspruch 1 oder 2 t das Längsrohr (3) des Weiteren mindestens ein Verriegelungsmittel umfasst, das eine Clipbefestigungsvorrichtung umfasst, die eine Zunge umfasst, die von einem Loch am ersten Ende (4a) angeordnet.

4. der Atemfilterhalteradapter nach einem der Ansprüche 1 bis 3 t ferner mindestens Dichtmittel umfasst, vorzugsweise aus Gummi, der am Innenboden der Längsausnehmung (20) angeordnet ist.

5. Atemfilterhalteradapter nach einem der Ansprüche 1 bis 4 t umfasst mindestens Mittel zum Abdichten am zweiten Ende (4b) des Längsrohrs

6. Atemfilterhalteradapter nach einem der Ansprüche 1 bis 5 t. Das Ablagefach (18) weist wenigstens Mittel von Bügeln zum schwenkbaren Verbinden einer seiner Oberseiten auf Längs-oder Querrichtung mit einer der Längs-oder Querseiten des Deckels (27), und umfasst mindestens Schnappbefestigungsmittel zum Feststellen des Deckels (27) an dem Ablagefach (18).

7. einen Atem Filterhalter adapter nach einem der vorhergehenden Ansprüche y t es mindestens einen eingespitzten Luftansaugkanal umfasst. , die in der inneren Verlängerung der inneren Kommunikations kammer (23) angeordnet ist und mit dem Aufbewahrungsfach (18) in Verbindung steht, und-das erste Ende (4a) und mindestens ein Ausatemluft-Abgaskanal, , die in der inneren Verlängerung der inneren Kommunikationskammer (23) angeordnet ist und mit dem ersten Ende (4a) in Verbindung steht, Ferner wird die ausgeatmete Luft durch mindestens ein Rückschlagventil ausgetragen, das in einem Gehäuse untergebracht ist Kammer, die in der Lage ist, mit mindestens einem ausgeatmeten Luftauslasskanal in Verbindung zu stehen, wobei sich das Fach in der inneren Kommunikationskammer (23) befindet, und zumindest am zweiten Ende (4b) des Längsrohrs (3).

8. Atem filterhalter-Adapter nach einem der vorhergehenden Ansprüche, t er vom Einweg-Typ, wobei das Filtrationsteil in den Körper des Adapters (1) eingebaut und mit mindestens Materialien hergestellt werden kann Metall, Kunststoffe, Komposite oder biologisch abbaubar und mit mindestens einem Herstellungsverfahren durch Mechano-Schweissen, Formen oder Injektion.

9. Atem filterhalter adapter nach einem der vorhergehenden Ansprüche, wobei das Längsrohr (3), des Weiteren mindestens ein Verriegelungsmittel mit einer Mehrzahl aufweist von am ersten Ende (4a) angeordneten Befestigungssystemen.

10. Atem filterhalter adapter nach einem der vorhergehenden Ansprüche, - mindestens Mittel zum Anbringen oder Kupplungen, die an alle Arten von Verbindungen angepasst werden können verwendet durch die verschiedenen Markierungen von aquatischen Integrale-Gesichtsmasken - Koppeln ihrer Schläuche, unabhängig von der Art des Schnorchels, (abnehmbare, einziehbare, entfernbare usw.), die von den Markierungen verwendet werden

11. Atemfilterhalteradapter nach einem der Ansprüche 1 bis 7 Darüber hinaus umfasst t mindestens eine - Verbindungsmittel für Atemschutzfilter-Verbrauchsmaterialien, die zumindest an der zweiten angeordnet sind Ende (4b) oder zumindest am oberen Mittelabschnitt (19A) oder am unteren mittleren Abschnitt (19b) des Längsrohrs (3)

12. umfasst Atemfilterhalter-Adapter nach einem der vorhergehenden Ansprüche, t - weitere lumineszierende Mittel, um sie durch mindestens ein Verfahren in Dunkelheit sichtbar zu machen Fluoreszenz oder Phosphoreszenz, oder einfach durch mindestens einen reflektierenden oder retro-reflektierenden Prozess.

13. Atemfilterhalter-Adapter nach einem der vorhergehenden Ansprüche, t umfasst zusätzlich mindestens Mittel von Kommunikationen, die es ermöglichen, die Stimme des Trägers der Maske (2) hörbar zu machen, durch Ausstattung des Adapters (1) mit einem Accus-Fed-Sound-Verstärkungssystem unter Verwendung einer drahtlosen Übertragung oder Draht, Verbinden des verstärkten Systems des Adapters (1) mit dem in der Maske (2) befindlichen Mikro.

14. Atemfilterhalter-Adapter nach einem der vorhergehenden Ansprüche, t umfasst zusätzlich mindestens einen ersten Hauptabschnitt mit einem Längsrohr mit einem ersten Endbeschlag - an einer aquatischen Vollgesichtsmaske, die angepasst werden soll und an ihrem zweiten vorstehenden Ende mindestens ein Verbindungsmittel aufweist, und mit mindestens einem unabhängigen Sekundärabschnitt mit einem Ablagefach - Atemfiltermaterialien, die zumindest an dem zentralen Abschnitt eines Längsrohrs angeordnet sind, und mit mindestens einem Mittel aus hervorstehenden Anschlüssen an seinem ersten-das Ende und auch Dichtmittel aufweisen, die an ihrem zweiten Ende abgedichtet sind, die und ferner mindestens ein flexibles Kreisabschnittselement mit zumindest Verbindungsmitteln an seinen Enden zur Verbindung Hauptteil des Adapters mit dem unabhängigen Sekundärteil

15. Atemfilterhalteradapter nach einem der vorhergehenden Ansprüche t. das Längsrohr (3) ferner mindestens ein Ablagefach (18) für Atemfiltermaterialien umfasst, Be - von aussen zugänglich, die zumindest zylindrisch ausgebildet sein kann und zumindest axial in dem Innenteil des Längsrohrs (3) angeordnet ist, die wobei sich das Aufbewahrungsfach (18) von der Basis des zweiten Endes (4b) zu dem zweiten Ende (4b) erstreckt Höhe des Einblaslufteinlasskanals (24), der sich an dem ersten Ende (4a) des Längsrohrs (3) befindet.

16. Atemfilterhalteradapter nach einem der vorhergehenden Ansprüche t. Der Deckel (27) weist ferner zumindest zylindrische Ausnehmungen auf, die in axialer Richtung an den Stellen vorgesehen sind wobei Durchgangslöcher (33) zum Einbringen mindestens des zylindrischen Kopfes des Fixiermittels (30) kann mindestens chc/btr oder czx/torx sein

## Claims

1. A respiratory filter holder adapter (1) for an aquatic full face mask (2) having at least one longitudinal tube (3) which comprises:
at least one first end (4a) adapted to fit over at least one housing (6), coupling means (7), aquatic full face mask (2); and
at least one radial locking means (8) having at least one radial clamping system (9) arranged at the base of the first end (4A) in axial direction on the outer wall of said longitudinal tube (3); and
at least one reduction means (10) having at least one clamping slot (11) which originates at the base of the first end (4a) of the longitudinal tube (3) and which extends in axial direction under the radial clamping system (9), the length of said clamping slot (11) is slightly greater than the radial clamping area (12) of said radial clamping system (9), thus said clamping slot (11) enables the reduction of the section of said longitudinal tube (3), under the clamping action (S1, S2) of said radial clamping system (9) thus allowing the blocking of the longitudinal tube (3) on the housing (6) of the coupling means (7), of the aquatic integral face mask (2) to be adapted; and
at least one radial sealing means (13) located at the first end (4a) in the inner wall in the axial direction of the longitudinal tube (3) and arranged slightly upstream of the radial clamping area (12) of said clamping system radial seal (9), said radial sealing means (13) having at least one radial circular groove (14) and at least one radial circular seal (15) housed in said radial circular groove (14); and
at least one second end (4b) comprising at least means of the connections (16) which are externally accessible and which on the other hand are adapted to allow the connection of a plurality of accessories; and
at least one storage compartment (18) capable of storing respiratory filter materials and arranged at least at the upper central portion (19a) of the longitudinal tube (3) and which is externally accessible, t, the longitudinal tube (3) has a longitudinal recess (20), which comprises an area of through perforations (21) located in the base (22) of said longitudinal recess (20), said through-hole area (21) communicating with the inner communication chamber (23) located at the lower central portion (19b) of said longitudinal tube (3), said inner communication chamber (23), allowing the flow of filtered air to the inspired air intake channel (24) located in the first end (4a) of said longitudinal tube (3) of said adapter (1), threads (25) are machined into blind holes (26) previously drilled vertically in locations centered laterally and longitudinally at both outer ends of said longitudinal obvious (20) in addition to said compartment further comprises at least one removable and reversible lid (27), which allows the closure of said storage compartment (18), said cover (27) has through perforations (28) on a portion of its area (29) as well as a plurality of at least means of fasteners (30) and at least sealing means (31)

2. Respiratory filter holder adapter, according to claim 1, t said removable and reversible lid (27) allows the closing of said storage compartment (18), while retaining the respiratory filter materials stored therein, said cover (27) also having through-perforations (28), arranged on a portion of its area (29) and delimited within the border of said cover (27), said through-perforations (28) providing admission of external air to the inside of the storage compartment (18), further the cover (27) comprises at least one sealing means (31) comprising at least one removable flat gasket (32) positionable on both faces of said cover (27) and provides sealing between said cover (27) and said compartment of storing (18), thereby avoiding air suction on the upper periphery of said storage compartment (18). In particular, when using sealed respiratory filters, said cover (27) also has through-holes (33) which are provided in locations, laterally and longitudinally centered at its ends and which allow the introduction of threaded screw-like fastening means (30) to flat head that allow said lid (27) to be tightened onto said storage compartment (18), said fastening means (30) being screwed into the tappings (25) machined in the longitudinal recess (20), in addition the pitches and sections of the fixing means (30). Being the same as the tappings (25) of the longitudinal recess (20), the locations of the through holes (33), of said lid (27) also corresponding to the so-called tapping locations (25), and further for holding in place said fastening means (30) on said lid (27), when opening it, said fastening means (30) are retained by at least holding means (34), once the fastening means (30) are inserted into the through holes (33), the holding means (34) is sleeved in said fastening means (30) in the axial direction and in the opening portion under said lid (27), said holding means (34) being positioned at the height of the lower plane of said lid (27)

3. Respiratory filter holder adapter according to claim 1 or 2, t the longitudinal tube (3) further comprises at least one locking means comprising a clip fastening device comprising a tongue pierced by one hole arranged at the first end (4a).

4. Respiratory filter holder adapter, according to any one of claims 1 to 3, t it further comprises at least sealing means, preferably made of rubber arranged at the inner base of said longitudinal recess (20).

5. Respiratory filter holder adapter, according to any one of claims 1 to 4, t it further comprises at least means for sealing at the second end (4b) of said longitudinal tube

6. Respiratory filter holder adapter, according to any one of claims 1 to 5, t the storage compartment (18) has at least means of hangings for pivotally connecting one of the upper sides thereof longitudinal or transverse sides with one of the longitudinal or transverse sides of the lid (27) and has at least means of snap fastening to immobilize the lid (27) on the storage compartment (18)

7. Respiratory filter holder adapter according to any one of the preceding claims, t it comprises at least one inspired air intake channel, arranged in the inner extension of the inner communication chamber (23) and communicating with the storage compartment (18) and the first end (4a) and at least one exhaled air exhaust duct, arranged in the inner extension of the inner communication chamber (23) and communicating with the first end (4a), further the exhaled air is discharged through at least one non-return valve housed in a compartment capable of being in communication with at least one exhaled air exhaust duct, the compartment being located in the inner communication chamber (23), and at least at the second end (4b) of said longitudinal tube (3).

8. Respiratory filter holder adapter, according to any one of the preceding claims, t it is of the disposable type, the filtration part being incorporated into the body of the adaptor (1) and capable of being made with at least materials, metallic, plastics, composites or biodegradable and with at least one method of manufacture by, mechano-welding, molding or injection.

9. Respiratory filter holder adapter, according to any one of the preceding claims, t the longitudinal tube (3), further comprises at least locking means including a plurality of fixing systems arranged at the first end (4a).

10. Respiratory filter holder adapter, according to any one of the preceding claims, t it further comprises, at least means for fitting or couplings adaptable to all types of connections used by the different brands of aquatic integral face masks for the coupling of their tubas, regardless of the type of snorkel, (detachable, retractable, removable, etc.), used by the marks

11. Respiratory filter holder adapter, according to any one of claims 1 to 7, t it further comprises at least one connection means for respiratory-use filter consumables arranged at least at the second end (4b), or at least at the upper central portion (19A) or at the lower central portion (19b) of said longitudinal tube (3).

12. Respiratory filter holder adapter, according to any one of the preceding claims, t it further comprises luminescent means for making it visible in the dark by at least one method of fluorescence or phosphorescence, or simply by at least one reflecting or retro-reflecting process.

13. Respiratory filter holder adapter, according to any one of the preceding claims, t it further comprises at least communications means, which make it possible to render audible the voice of the wearer of the mask (2), by equipping the adapter (1) with an accus-fed sound amplification system, using wireless or wired transmission connecting the amplified system of the adapter (1) to the micro located in the mask (2)

14. Respiratory filter holder adapter according to any one of the preceding claims, t it further comprises at least one first main part having a longitudinal tube with a first end fitting on an aquatic full face mask to be adapted and having at its second protruding end at least one connection means, and having at least one independent secondary portion which includes a storage compartment for respiratory filtering materials arranged at least on the central portion of a longitudinal tube, and having at least one means of protruding connections at its first end and also having sealing means at its second end, and further at least one flexible circular section element having at least connection means at its ends for connecting the main part of the adapter to the independent secondary part.

15. Respiratory filter holder adapter according to any one of the preceding claims, t the longitudinal tube (3) further comprises at least one storage compartment (18) for respiratory filtering materials, accessible from the outside, which can be at least of cylindrical shape and be at least arranged in the axial direction in the inner part of said longitudinal tube (3), said storage compartment (18) extending from the base of the second end (4b) to the height of the inspired air intake channel (24) located at the first end (4a) of said longitudinal tube (3).

16. Respiratory filter holder adapter according to any one of the preceding claims, t the cover (27) also has at least cylindrical recesses which are arranged in the axial direction in the locations through holes (33) and which allow the introduction of at least the cylindrical head of the fixing means (30) which can be at least of Chc/Btr or Czx/Torx types.
